**Europäisches Patentamt**

**European Patent Office**

**Office européen des brevets**

(11) Veröffentlichungsnummer: **0 180 261**
**B1**

# EUROPÄISCHE PATENTSCHRIFT

(45) Veröffentlichungstag der Patentschrift:
**26.04.89**

(51) Int. Cl.⁴: **A01B 49/02,** A01B 17/00

(21) Anmeldenummer: **85201551.0**

(22) Anmeldetag: **26.09.85**

(54) **Pflug.**

(30) Priorität: **28.09.84 NL 8402960**

(43) Veröffentlichungstag der Anmeldung:
**07.05.86 Patentblatt 86/19**

(45) Bekanntmachung des Hinweises auf die Patenterteilung:
**26.04.89 Patentblatt 89/17**

(84) Benannte Vertragsstaaten:
**DE FR GB IT NL**

(56) Entgegenhaltungen:
**DE-A- 2 715 160**
**DE-B- 2 848 831**
**DE-C- 347 046**
**FR-A- 2 489 076**
**US-A- 3 339 643**

(73) Patentinhaber: **C. van der Lely N.V., Weverskade 10 P.O. Box 26, NL-3155 ZG Maasland(NL)**

(72) Erfinder: **van der Lely, Cornelis, 7 Brüschenrain, Zug(CH)**

(74) Vertreter: **Mulder, Herman et al, Octrooibureau Van der Lely N.V. Weverskade 10 P.O. Box 26, NL-3155 ZG Maasland(NL)**

ACTORUM AG

## Beschreibung

Die Erfindung betrifft einen Pflug mit einem Rahmenbalken an dem bezüglich der Fahrtrichtung hintereinander und seitlich versetzt mehrere Pflugkörper angebracht sind und mit einer seitlich versetzt hinter jedem Pflugkörper angeordneten Walze, welche den von dem vorausgehenden Pflugkörper losgeschnittenen und gewendeten Erdbalken bearbeitet und welche mittels einer sich vom Rahmenbalken nach hinten und unten erstreckenden Tragarmkonstruktion um eine sich quer zur Fahrtrichtung erstreckende, am Rahmenbalken angeordnete Achse verschwenkbar gelagert ist.

Ein Pflug dieser Art ist der deutschen Offenlegungsschrift 2 715 160 zu entnehmen. Bei dieser bekannten Konstruktion ist jede Walze mittels eines aus zwei parallelen Armen bestehenden Tragrahmens angebracht, wobei diese Tragarme sich während des Betriebes da befinden, wo sie leicht mit dem von dem Pflugkörper losgeschnittenen Erdbalken in Berührung kommen können. Dies bedeutet, dass hierdurch das Ganze empfindlich ist für Verstopfungen wodurch die Wirkung der Walzen weitgehend oder ganz verloren gehen kann.

Aus der US-PS 3 339 643 ist eine Bodenbearbeitungsmaschine bekannt, die eine um eine quer zur Fahrtrichtung liegende Achse drehbare Werkzeugtrommel aufweist. Hinter der Trommel ist eine Walze angebracht, die mittels eines hydraulischen Verstellzylinders in Höhenrichtung verstellbar ist zur Einstellung der Arbeitstiefe der Werkzeugtrommel.

Die Erfindung bezweckt eine derartige Anordnung der Walze, dass Verstopfungen weitgehend verhindert werden und nach Wunsch der Bodendruck der Walze einstellbar ist.

Gemäss der Erfindung wird dies dadurch erzielt, dass die Tragarmkonstruktion für jede Walze von einem einzigen sich seitwärts nach hinten und unten zur Walze erstreckenden Tragarm gebildet ist, dessen unteres freies Ende sich gerade hinter dem Ende des Streichblechs des vorausgehenden Pflugkörpers befindet, dass die Walzen jeweils am freien Ende des einzigen Tragarmes gelagert sind, und dass jeder Tragarm an seinem anderen schwenkbar gelagerten Ende über die Achse mit einer Spurstange verbunden ist, die mit einem hydraulischen Verstellzylinder gekuppelt ist, so dass der Druck der Walze auf den Boden hydraulisch einstellbar ist.

Mittels dieser Konstruktion wird erzielt, dass mittels der Tragarme über die Spurstange für jede Walze zusätzlich der Bodendruck einstellbar ist ohne dass dabei Verstopfungen die erforderliche Belastung der jeweiligen Walze beeinträchtigen können.

Ausführungsbeispiele der Erfindung werden nachstehend anhand der Zeichnung näher erläutert. Es zeigen:

Fig. 1 eine Draufsicht auf einen Pflug nach der Erfindung,

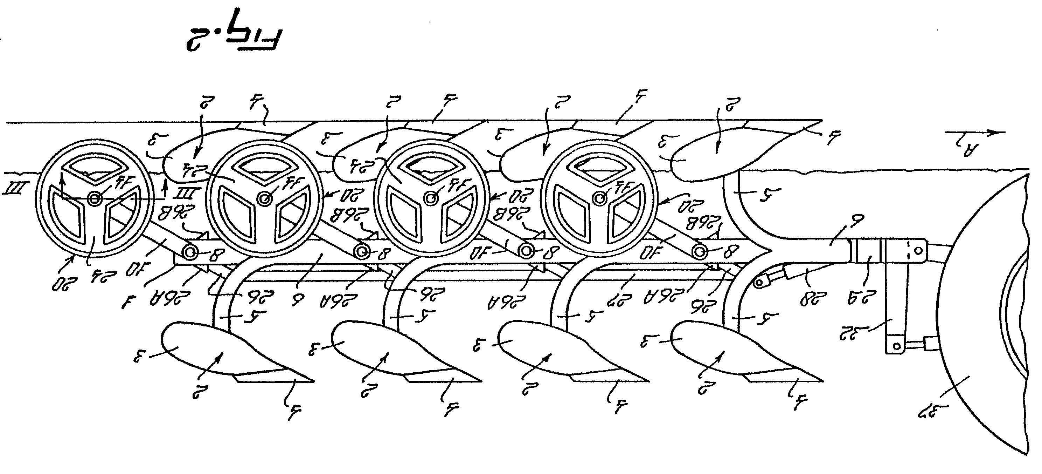

Fig. 2 eine Ansicht entlang dem Pfeil II in Fig. 1,

Fig. 3 in vergrössertem Massstab die Unterstützung und Ausführung einer Walze bei einem erfindungsgemässen Pflug,

Fig. 4 ein zweites Ausführungsbeispiel einer Walze, die bei einem erfindungsgemässen Pflug verwendbar ist,

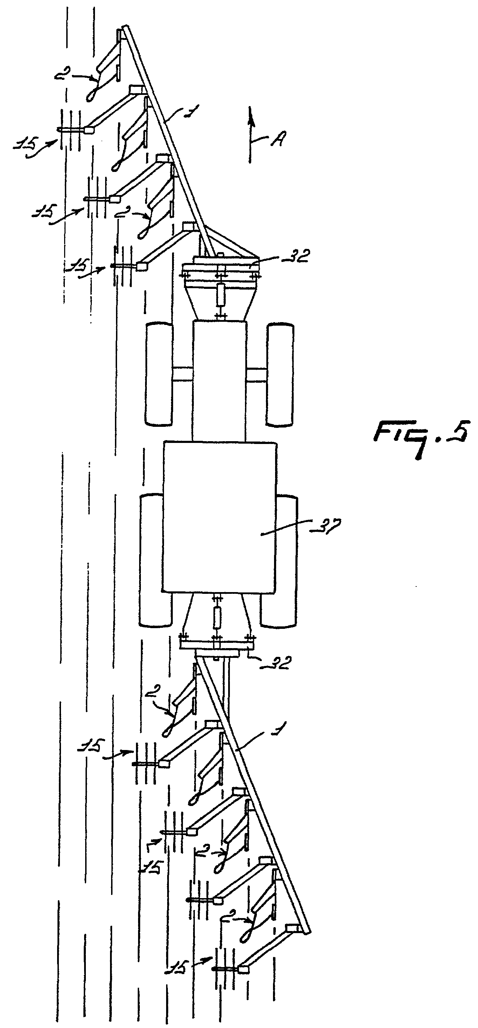

Fig. 5 eine Anordnung zweier erfindungsgemässer Pflüge, die an der Vorderseite bzw. an der Rückseite eines Schleppers angebracht und, wie der Pflug nach Fig. 1 und 2, als Drehpflüge ausgeführt sind.

Die in den Figuren dargestellte Vorrichtung betrifft eine Bodenbearbeitungsmaschine, insbesondere einen Pflug. Der Pflug enthält einen Rahmenbalken 1, der sich schräg in bezug auf die Fortbewegungsrichtung A erstreckt und im Betrieb wenigstens nahezu horizontal liegt, wobei die Längsmittellinie einen Winkel von etwa 30° mit der Fortbewegungsrichtung bildet.

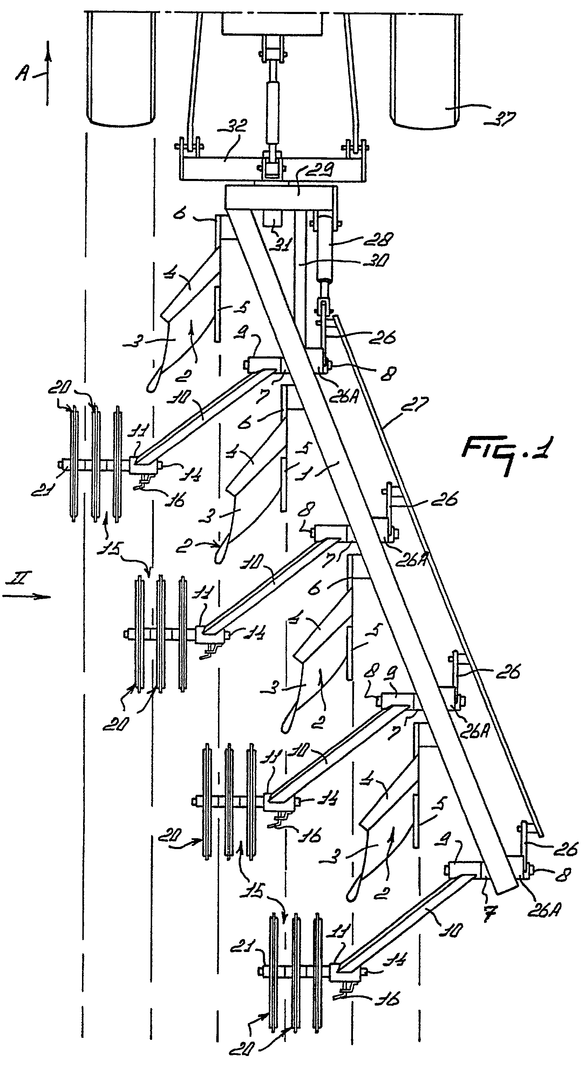

Der als Drehpflug ausgeführte Pflug enthält vier Pflugkörperpaare 2, die in gleichem Abstand voneinander am Rahmenbalken 1 angebracht sind. Das vordere Pflugkörperpaar 2 ist nahe bei der Vorderseite des Rahmens 1 befestigt, und das hintere Paar ist im Abstand vor dem hinteren Ende des Rahmenbalkens angebracht, und dieser Abstand entspricht dem gegenseitigen Abstand zwischen den Pflugkörperpaaren (Fig. 1).

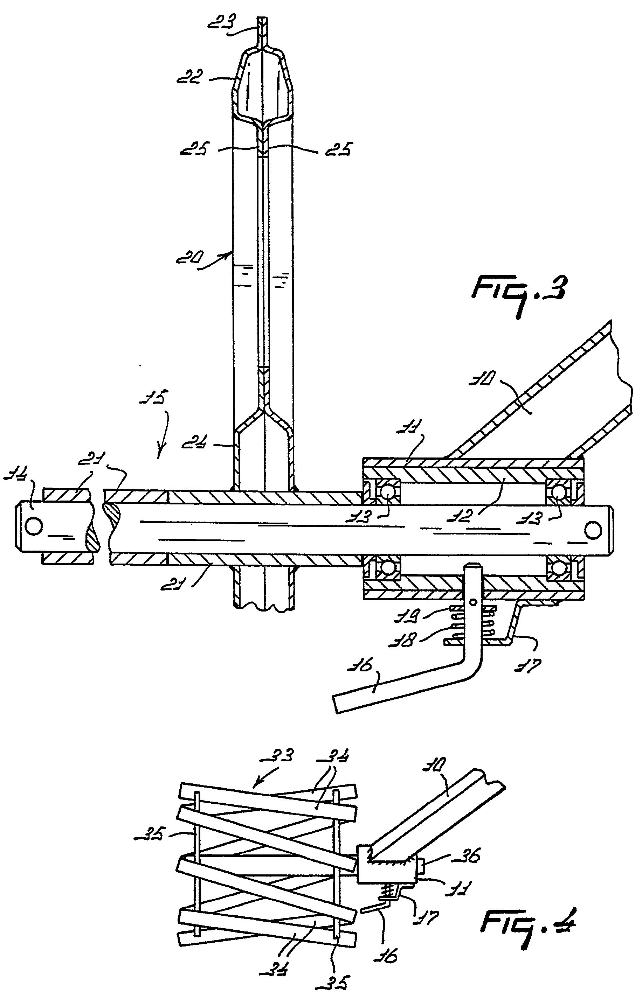

Jeder der Pflugkörper 2 eines Paares enthält ein Streichblech 3 und eine sich daran anschliessende Schar 4 und wird mit Hilfe einer Haltestrebe 5 unterstützt. Die Haltestreben 5 gehen in Höhe des Rahmenbalkens 1 in einen gemeinsamen, sich nach vorn erstreckenden Grindel 6 über, der mit seinem Vorderende an einer Seite des Rahmenbalkens 1 befestigt ist. Gerade vor der Befestigung der Pflugkörper 2 des in bezug auf die Fortbewegungsrichtung A zweiten, dritten und vierten Paares ist der hohl ausgeführte Rahmenbalken 1 mit einer Lagerbüchse 7 versehen, in der eine Achse 8 unterstützt ist, die sich wenigstens nahezu quer zur Fortbewegungsrichtung A erstreckt und wenigstens nahezu horizontal liegt. Um die Achse 8 ist an der Seite der Pflugkörper 2 eine Büchse 9 frei schwenkbar angebracht, die sich an der Vorderseite eines Tragarmes 10 befindet. Der Tragarm 10 erstreckt sich vom Rahmenbalken 1 schräg nach unten und seitwärts sowie etwas nach hinten derart, dass das untere Ende des Tragarmes 10 sich in Höhe der Mitte eines Pflugkörpers 2 und praktisch gerade hinter dem freien Ende des Streichblechs 3 des vorgehenden Pflugkörpers befindet (Fig. 1). Das betreffende Ende jedes Tragarmes 10 ist mit einer Büchse 11 versehen, in der abnehmbar eine zweite Büchse 12 angebracht ist (Fig. 3). In der zweiten Büchse 12 ist mittels der Lager 13, die nahe bei den Enden der Büchse liegen, eine Achse 14 gelagert, die sich wenigstens nahezu quer zur Fortbewegungsrichtung A erstreckt und horizontal liegt. Jede Achse 14 erstreckt sich nach der vom Rahmen abgewandten Seite der zweiten Büchse 12 und bildet die zentral liegende Drehungsachse einer Walze 15. Die zweite Büchse 12 kann mittels eines Stiftes 16 in bezug auf die erste Büchse 11 verriegelt werden. Der Stift 16 ist an der Aussenseite der Büchse 11 mittels einer Zunge 17 unterstützt und kann gegen die Wirkung einer Feder 18, die um den Stift zwischen der Zunge 17 und einem Anschlag 19 um den Stift angebracht ist, in seiner Längsrichtung zum Herausnehmen der zweiten Büchse 12 mit der in der zweiten Büchse gelagerten und zur Walze 15 gehörenden Achse 14 verschoben werden. Durch die erwähnte besondere Anordnung des Tragarmes 10 kann eine Walze 15 einen Streifen bearbeiten, auf dem der vom vorgehenden Pflugkörper 2 losgeschnittene und gewendete Erdbalken aufgetragen wird (Fig. 1).

Jede Walze 15 enthält drei nebeneinander liegende scheibenförmige Organe 20, die mittels Naben 21 in wenigstens nahezu gleichem Abstand voneinander frei drehbar um die Achse 14 angebracht sind. Jedes der scheibenförmigen Organe 20 ist hohl ausgeführt und enthält einen felgenförmigen Hohlteil 22, der auf seinem Umfang mit einem Rand 23 versehen ist, der sich wenigstens nahezu senkrecht zur Drehungsachse eines scheibenförmigen Organs 20 erstreckt und wobei der Teil mittels speichenförmiger Hohlteile 24 mit der Nabe 21 verbunden ist. Im Querschnitt verläuft der felgenförmige Teil 22 nach seinem Umfang kegelförmig, so dass ein Eindruck mit auseinanderstrebend auflaufenden Wänden im Boden gemacht werden kann.

Jedes scheibenförmige Organ 20 ist aus zwei plattenförmigen Teilen 25 zusammengesetzt, die vorgestanzt und spiegelbildlich aneinander befestigt sind. Das Ende der durch den Rahmenbalken 1 hindurchgeführten Achse 8, das sich an der Seite des Rahmens 1 befindet, die von den Pflugkörpern 2 abgewandt ist, ist mit einem Hebel 26 versehen, der sich schräg nach vorn und in der Seitenansicht betrachtet in der Verlängerung eines Tragarmes 10 erstreckt und – wie aus Fig. 1 ersichtlich – wenigstens nahezu parallel zu einer Ebene in der Fortbewegungsrichtung A des Pfluges liegt, und diese Ebene verläuft ebenfalls wenigstens nahezu parallel zu den Haltestreben 5 für die Pflugkörper 2.

Das Vorderende jedes Hebels 26 ist mit einer Spurstange 27 gelenkig verbunden, die sich in Draufsicht betrachtet wenigstens nahezu parallel zum Rahmenbalken 1 erstreckt. Die Spurstange 27 ist an der Vorderseite mit einem Ende eines hydraulischen Verstellzylinders 28 gelenkig verbunden, der mit dem anderen Ende mit einem Querbalken 29 verbunden ist. Der Querbalken 29 ist am vorderen Ende des Rahmenbalkens 1 angebracht. In einigem Abstand von seinem vom Rahmenbalken 1 abgewandten Ende ist der Querbalken 29 mit Hilfe eines sich wenigstens nahezu parallel zur Fortbewegungsrichtung A erstreckenden Trägers 30 mit dem Rahmenbalken 1 verbunden. Der Querbalken 29 ist weiter mit Hilfe einer sich in der Fortbewegungsrichtung A erstreckenden Achse 31 in bezug auf einen mit einem Dreipunktbock versehenen Gestellteil 32 schwenkbar angebracht, der mit dem Dreipunktheber eines Schleppers verbunden werden kann.

Auf die nicht näher dargestellte bekannte Weise kann der Querbalken 29 und damit der Rahmenbalken 1 um die sich in der Fortbewegungsrichtung A erstreckende Achse 31 geschwenkt werden, um die anderen Pflugkörper 2 eines Paares in eine Arbeitsstellung zu bringen, bei der die Erde im Betrieb in einer entgegengesetzten Richtung verschoben wird.

Die Wirkungsweise des oben beschriebenen Pfluges ist wie folgt.

Im Betrieb ist der Pflug mit Hilfe des mit einem Dreipunktbock versehenen Gestellteils 32 mit dem Dreipunktheber eines Schleppers verbunden und der hydraulische Verstellzylinder 28 ist an die Hydraulik des Schleppers angeschlossen. Nach dem Einstellen einer bestimmten Pflugtiefe mit Hilfe des Hebers oder mit Hilfe eines nicht näher dargestellten Stützrades kann in einer Arbeitsstellung, wie beispielsweise in Fig. 1 dargestellt, wobei die Pflugkörper 2 der jeweiligen Paare die Erde nach links verschieben, der Pflug in die Richtung des Pfeiles A fortbewegt werden.

Für jeden der arbeitenden Pflugkörper 2 ist eine in bezug auf die Fortbewegungsrichtung A direkt hinter dem Pflugkörper auf dem benachbarten Bodenstreifen arbeitende Walze 15 vorgesehen, die durch die oben beschriebenen drei benachbarten, scheibenförmigen Organe 20 gebildet wird. Mit Hilfe der scheibenförmigen Organe 20 der jeweiligen Walzen 15, die sich über den vom vorgehenden Pflugkörper 2 losgeschnittenen und gewendeten Erdbalken bewegen, wird die Erde dieser Erdbalken unter stellenweise muldenförmigen Verdichtungen geebnet, wodurch es möglich wird, sofort einen einsäbar bearbeiteten Boden zu erhalten.

Mit Hilfe des hydraulischen Verstellzylinders 28 kann über die Spurstange 27 und die Hebel 26, die auf den Achsen 8 befestigt sind, ein bestimmter Druck auf die Walzen 15 und über die scheibenförmigen Organe 20 auf den Boden ausgeübt werden, wodurch die Wirkung der scheibenförmigen Organe beliebig beeinflussbar ist.

Wie aus der Fig. 1 ersichtlich ist, sind die jeweiligen Walzen 15 derart angebracht, dass die inneren bzw. äusseren scheibenförmigen Organe 20 auffolgender Walzen in der Fortbewegungsrichtung A gesehen in einem Abstand voneinander liegen, der wenigstens nahezu gleich dem gegenseitigen Abstand der scheibenförmigen Organe 20 einer Walze 15 ist. Der Durchmesser eines scheibenförmigen Organs beträgt vorzugsweise etwa 70 cm.

Da die Achse 14 jeder Walze 15 frei drehbar unterstützt ist und gleichfalls die scheibenförmigen Organe 20 frei drehbar auf der Achse 14 angebracht sind, können wechselnde Drehzahlen auftreten, die die Wirkung der betreffenden Walze zugute kommen.

Nach dem Verschieben des Verriegelungsstiftes 16 kann eine Walze 15 zusammen mit der Achse 14 und der Lagerung für diese Achse aus der Büchse 11 am unteren Ende eines Tragarmes 10 herausgenommen und eine andere Walze, zum Beispiel die Walze 33 nach Fig. 4, angebracht werden. Die Walze 33 ist auf dem Umfang mit stab- bzw. rohrförmigen Teilen 34 versehen, die mittels scheibenförmiger Stützen 35 auf einer Achse 36 befestigt sind, die auf die gleiche Weise wie die Achse 14 unterstützt ist. Mit der Walze 33 wird eine Krümelwirkung erreicht, wobei die stabförmigen Teile für sich quer zur Fortbewegungsrichtung A erstreckende stellenweise Verdichtungen sorgen.

Der Durchmesser der Walze 33 beträgt vorzugsweise etwa 40 cm bei einer Arbeitsbreite ebenfalls von etwa 40 cm. Die Walzen 15 können die gleiche Arbeitsbreite besitzen. Die hohl ausgeführten, mit Hilfe vorgestanzter Bleche gebildeten, scheibenförmigen Organe 20 der betreffenden Walze 15 sorgen dafür, dass diese Walzen im Leichtgewicht ausgeführt sein können.

Am Ende des in Fig. 1 dargestellten Arbeitsganges, bei dem die betreffenden Pflugkörper 2 die Erde nach links bringen, kann nach dem Ausheben der Ganzheit, wobei auch die Walzen ausgehoben werden, weil sie mit dem Gestell des Pfluges verbunden sind, der Pflug auf die oben beschriebene Weise umgekehrt werden, wonach die anderen Pflugkörper der betreffenden Paare in eine Arbeitsstellung gebracht werden können, bei der sie die Erde nach rechts verschieben. Beim Ausheben des Pfluges laufen die Hebel 26 an die Anschläge 26A, die eine Abwärtsbewegung der zum Pflug gehörenden abnehmbaren Walzen 15 begrenzen. Beim Umkehren schwenken die Tragarme 10 um die Achse 8 über einen Winkel von etwa 50°, bis die Hebel 26 an die Anschläge 26B laufen, wonach die Ganzheit erneut in Betrieb gesetzt werden kann und die Walzen 15 bzw. 33 auf die beschriebene Weise auf den gewendeten Erdbalken einwirken.

Mit den oben beschriebenen Pflügen nach der Erfindung lässt sich auch eine Anordnung schaffen, bei der mit Hilfe eines Hebers ein Pflug an der Rückseite und ein Pflug an der Vorderseite eines Schleppers 37 angebracht ist. Hierbei kann der vor dem Schlepper befindliche Pflug dann – wie angegeben – mit drei Pflugkörperpaaren versehen sein. Auf dieselbe Weise wie in obiger Beschreibung können hierbei Walzen 15 bzw. 33 verwendet werden.

Da jeder der Pflüge als Drehpflug ausgeführt ist, kann am Ende des Arbeitsganges nach dem Ausheben jeder Pflug umgekehrt und erneut eingesetzt werden, wobei dann der andere Pflugkörper der jeweiligen Paare den Boden bearbeitet und die Walzen in ihrer neuen Arbeitsstellung den gewendeten Erdbalken bearbeiten.

Es wird klar sein, dass statt der oben beschriebenen Walzen 15 bzw. 33 auch andere Bearbeitungsorgane angebracht werden können, die dann auf dieselbe Weise – da sie mit dem Pfluggestell verbunden sind – mit dem Pflug befördert und ausserdem mit Hilfe des hydraulischen Zylinders 38 beliebig mehr oder weniger belastet werden können, um die Wirkung zu beeinflussen. Für die jeweiligen Walzen kann ebenfalls ein Antrieb vorgesehen sein, so dass die Wirkung über diesen Antrieb, der einen Drehzahlumsetzer enthalten kann, beeinflussbar ist.

Die Erfindung beschränkt sich nicht auf obige Beschreibung, sondern bezieht sich auf alle möglicherweise beschriebenen Einzelheiten in den Figuren.

## Patentansprüche

1. Pflug mit einem Rahmenbalken (1) an dem bezüglich der Fahrtrichtung hintereinander und seitlich versetzt mehrere Pflugkörper (2) angebracht sind und mit einer seitlich versetzt hinter jedem Pflugkörper (2) angeordneten Walze (15, 33), welche den von dem voraus gehenden Pflugkörper (2) losgeschnittenen und gewendeten Erdbalken bearbeitet und welche mittels einer sich vom Rahmenbalken (1) nach hinten und unten erstreckenden Tragarmkonstruktion um eine sich quer zur Fahrtrichtung erstreckende, am Rahmenbalken (1) angeordnete Achse (8) verschwenkbar gelagert ist, dadurch gekennzeichnet, dass die Tragarmkonstruktion für jede Walze von einem einzigen sich seitwärts nach hinten unten zur Walze erstreckenden Tragarm (10) gebildet ist, dessen unteres freies Ende sich gerade hinter dem Ende des Streichblechs (3) des vorausgehenden Pflugkörpers befindet, dass die Walzen (15, 33) jeweils am freien Ende des einzigen Tragarms gelagert sind, und dass jeder Tragarm an seinem anderen schwenkbar gelagerten Ende über die Achse (8) mit einer Spurstange (27) verbunden ist, die mit einem hydraulischen Verstellzylinder (28) gekuppelt ist, so dass der Druck der Walze auf den Boden hydraulisch einstellbar ist.

2. Pflug nach Anspruch 1, dadurch gekennzeichnet, dass die Achse (14) einer Walze (15) zusammen mit einer Lagerung (13) für diese Achse abnehmbar angebracht ist.

3. Pflug nach Anspruch 2, dadurch gekennzeichnet, dass die Lagerung (13) für die Achse (14) sich in einer zweiten Büchse (12) befindet, die mit Hilfe eines Verriegelungsstiftes (16) aus einer ersten Büchse (11) herausnehmbar ist, die an der Unterseite des Tragarms (10) befestigt ist.

4. Pflug nach einem der vorangehenden Ansprüche, dadurch gekennzeichnet, dass die wirksamen Teile der Walze (15) aus Stahlblech gebildet sind.

5. Pflug nach einem oder mehreren der vorangehenden Ansprüche, dadurch gekennzeichnet, dass die Achse (14) der Walze (15) frei drehbar unterstützt ist und scheibenförmige Organe (20) frei drehbar auf der Achse (14) angebracht sind.

6. Pflug nach Anspruch 5, dadurch gekennzeichnet, dass die scheibenförmigen Organe (20) einen felgenförmigen Teil (22) enthalten, der auf dem Umfang mit einem Rand (23) versehen ist, der sich wenigstens nahezu senkrecht zur Drehungsachse des Organs (20) erstreckt.

7. Pflug nach Anspruch 6, dadurch gekennzeichnet, dass der felgenförmige Teil (22) mittels speichenförmiger Teile (24) an einer Nabe (21) angebracht ist.

8. Pflug nach Anspruch 6 oder 7, dadurch gekennzeichnet, dass der felgenförmige Teil (22) einen Querschnitt hat, der nach dem Aussenumfang konisch verläuft.

9. Pflug nach einem der Ansprüche 5 bis 8, dadurch gekennzeichnet, dass der Durchmesser eines scheibenförmigen Organs (20) etwa 70 cm beträgt.

10. Pflug nach einem oder mehreren der vorangehenden Ansprüche 1–7, dadurch gekennzeichnet, dass die Walze (33) als Gitterwalze ausgebildet ist, die am Umfang mit sich in der Richtung der Drehungsachse erstreckenden stabförmigen Teilen (34) versehen ist.

11. Pflug nach Anspruch 10, dadurch gekennzeichnet, dass der Durchmesser der Gitterwalze (33) etwa 40 cm beträgt.

12. Pflug nach einem oder mehreren der vorangehenden Ansprüche, dadurch gekennzeichnet, dass die Arbeitsbreite einer Walze (15 bzw. 33) etwa 40 cm beträgt.

13. Pflug nach einem der vorangehenden Ansprüche, dadurch gekennzeichnet, dass sich die Spurstange (27) an der anderen Seite des Rahmenbalkens (1) des Pfluges befindet als die Walzen (15 bzw. 33).

## Claims

1. Plough with a frame beam (1) to which are attached several plough bottoms (2) one behind another and laterally displaced, relative to the direction of travel, and with a cylinder (15, 33) arranged behind each plough bottom (2) and laterally displaced which processes the furrow slice cut free and turned by the plough bottom (2) travelling ahead and which by means of a bracket construction extending backwards and downwards from the frame beam (1) is pivoted about an axle (8) extending crosswise to the direction of travel and located on the frame beam (1), characterised in that the bracket construction for each cylinder is made up of a single bracket (10) extending sideways, backwards, down to the cylinder, of which bracket the lower free end is found directly behind the end of the mouldboard (3) of the plough bottom travelling ahead, in that the cylinders (15, 33) are mounted in each case at the free end of the single bracket, and in that each bracket is linked at its other pivoted end by way of the axle (8) with a track rod (27), which is coupled with a hydraulic adjusting cylinder (28), so that the pressure of the cylinder on the ground can be set hydraulically.

2. Plough according to claim 1, characterised in that the axle (14) of a cylinder (15) together with a mounting (13) for this axle is removably attached.

3. Plough according to claim 2, characterised in that the mounting (13) for the axle (14) is found in a second casing (12), which with the aid of a locking pin (16) can be removed from a first casing (11), which casing is attached to the underside of the bracket (10).

4. Plough according to one of the preceding claims, characterised in that the effective parts of the cylinder (15) are made of sheet steel.

5. Plough according to one or several of the preceding claims, characterised in that the axle (14) of the cylinder (15) is supported in such a way that it can rotate freely and disc-shaped elements (20) are attached on the axle (14) in such a way that they can rotate freely.

6. Plough according to claim 5, characterised in that the disc-shaped elements (20) have a felly-shaped part (22) which is provided with an edge (23) on the perimeter, which extends at least almost vertically to the rotating axle of the element (20).

7. Plough according to claim 6, characterised in that the felly-shaped part (22) is attached by means of spoke-shaped parts (24) to a hub (21).

8. Plough according to claim 6 or 7, characterised in that the felly-shaped part (22) has a cross-section which tapers away towards the outer perimeter.

9. Plough according to one of the claims 5 to 8, characterised in that the diameter of a disc-shaped element (20) comes to approximately 70 cm.

10. Plough according to one or several of the preceding claims 1–7, characterised in that the cylinder (33) is formed as a lattice cylinder which is provided on the perimeter with bar-shaped parts (34) extending in the direction of the rotating axle.

11. Plough according to claim 10, characterised in that the diameter of the lattice cylinder (33) comes to approximately 40 cm.

12. Plough according to one or several of the preceding claims, characterised in that the working width of a cylinder (15 or 33) comes to approximately 40 cm.

13. Plough according to one of the preceding claims, characterised in that the track rod (27) is found on the other side of the frame beam (1) of the plough to the cylinders (15 or 33).

## Revendications

1. Charrue avec une poutre de chassis (1), sur laquelle sont disposés l'un derrière l'autre dans le sens de la marche et en étant décalés latéralement plusieurs corps de charrue (2), et avec un rouleau (15, 33) disposé derrière chaque corps de charrue (2) en étant décalé latéralement, ce rouleau travaillant la bande de terre découpée et retournée par le corps de charrue (2) qui précède ce rouleau, lequel est monté au moyen d'une structure de bras porteur s'étendant à partir de la poutre de chassis (1) vers l'arrière et vers le bas, transversalement au sens de marche, articulée sur un axe (8) fixé à la poutre de chassis (1), caractérisée en ce que la structure de bras porteur pour chaque rouleau est constituée d'un unique bras porteur (10) s'étendant latéralement vers l'arrière jusqu'au rouleau, l'extrémité inférieure libre de ce bras se trouvant directement derrière l'extrémité du versoir (3) du corps de charrue précédent, en ce que les rouleaux (15, 33) sont respectivement montés sur l'extrémité libre du bras porteur unique, et en ce que chaque bras porteur est accouplé sur son autre extrémité, montée de manière oscillante, avec une barre d'accouplement (27) par l'intermédiaire de l'axe (8), cette barre étant reliée à un vérin hydraulique de réglage (28) de telle sorte que la pression du rouleau sur le sol soit réglable hydrauliquement.

2. Charrue selon la revendication 1, caractérisée en ce que l'axe (14) d'un rouleau (15) est monté de manière démontable, ensemble avec un palier (13) pour cet axe.

3. Charrue selon la revendication 2, caractérisée en ce que la palier (13) pour l'axe (14) se trouve dans une deuxième douille (12) pouvant être retirée, à l'aide d'un goujon de verrouillage (16), hors d'une première douille (11) fixée à l'extrémité inférieure du bras porteur (10).

4. Charrue selon une des revendications précédentes, caractérisée en ce que les parties travaillantes du rouleau (15) sont constituées de tôle d'acier.

5. Charrue selon une ou plusieurs des revendications précédentes, caractérisée en ce que l'axe (14) du rouleau (15) est soutenu de manière à tourner librement, et en ce que des organes en forme de disques (20) sont disposés sur l'axe (14) en tournant librement.

6. Charrue selon la revendication 5, caractérisée en ce que les organes en forme de disques (20) comportent une partie (22) en forme de jante munie sur son pourtour d'un rebord (23) qui s'étend au moins à peu près perpendiculairement à l'axe de rotation de l'organe (20).

7. Charrue selon la revendication 6, caractérisée en ce que la partie en forme de jante (22) est montée sur un moyeu (21) au moyen de pièces (24) en forme de rayons.

8. Charrue selon la revendication 6 ou 7, caractérisée en ce que la partie en forme de jante (22) a une section transversale qui évolue de manière conique en direction du pourtour extérieur.

9. Charrue selon une des revendications 5 à 8, caractérisée en ce que le diamètre d'un organe en forme de disque (20) est d'environ 70 cm.

10. Charrue selon une ou plusieurs des revendications 1–7 précédentes, caractérisée en ce que le rouleau (33) est réalisé sous la forme d'un roleau en treillis muni sur son pourtour d'éléments (34) en forme de barreaux s'étendant dans le sens de l'axe de rotation.

11. Charrue selon la revendication 10, caractérisée en ce que le diamètre du rouleau en treillis (33) est d'environ 40 cm.

12. Charrue selon une ou plusieurs des revendications précédentes, caractérisée en ce que la largeur de travail d'un rouleau (15, resp. 33) est d'environ 40 cm.

13. Charrue selon une des revendications précédentes, caractérisée en ce que la barre d'accouplement (28) se trouve sur le côté de la poutre de chassis (1) de la charrue opposé à celui des rouleaux (15, resp. 33).

FIG.1

Fig.2

FIG.3

FIG.4

FIG.5